# FASCICULE DE BREVET EUROPEEN

(11) **EP 2 267 401 B1**
(45) Date de publication et mention de la délivrance du brevet: **09.07.2014**
(21) Numéro de dépôt: 10177661.5
(22) Date de dépôt: 25.10.2007
(51) Int. Cl.: B60R 21/263, B60R 21/264, F42B 3/04

(54) **Générateur de gaz à chambres primaire et secondaire**
Gasgenerator mit primären und sekundären Kammern
Gas generator with primary and secondary chambers

(30) Priorité: 26.10.2006 FR 0609407; 27.02.2007 FR 0701402
(43) Date de publication de la demande: 29.12.2010
(62) Demande divisionnaire de: 07866437.2
(73) Titulaire: TRW Airbag Systems GmbH, 84544 Aschau am Inn (DE)
(72) Inventeur: Cord, Paul-Philippe, 75009 Paris (FR); Sijilmassi, Myriam, 31320 Castanet Tolosan (FR); Zapata-Massot, Céline, 31460 Caraman (FR); Frances, Cédric, 50825 Köln (DE)
(74) Mandataire: Breesé, Pierre

(56) Documents cités:
- WO-A-01/89885
- WO-A2-2006/130848
- US-A1- 2006 005 734

## Description

L'invention concerne un dispositif de génération de gaz, dit générateur de gaz. En particulier, l'invention s'applique, dans le domaine de l'automobile, à un générateur de gaz destiné à être associé à un organe de sécurité, tel qu'un coussin gonflable (appelé airbag) ou un vérin prétensionneur de ceinture de sécurité, pour former un système de protection (par exemple en cas de choc) d'un occupant d'un véhicule. L'invention s'étend à d'autres domaines d'application tels que l'aéronautique (un tel générateur de gaz pouvant par exemple être associé à un toboggan de sécurité d'un avion), le spatial (un tel générateur de gaz pouvant par exemple être utilisé pour modifier la trajectoire d'un satellite), les sports (en association, par exemple, avec des organes de sécurité tels qu'une bouée ou une petite embarcation gonflable dans le cadre de sports nautiques, ou tels qu'une combinaison dans le cadre de sports de neige, etc.)...

Il existe principalement deux grandes familles de générateurs de gaz :
- les générateurs dits générateurs pyrotechniques, qui contiennent une charge explosible, généralement sous forme solide, dont la combustion ou la décomposition génère des gaz,
- les générateurs dits générateurs hybrides, qui contiennent à la fois une charge explosible (sous forme solide) et un gaz, neutre ou oxydant, stocké sous pression. Les générateurs de gaz hybrides présentent un encombrement supérieur à celui des générateurs de gaz pyrotechniques, à quantité de gaz générés égale, et une ossature renforcée dont le poids constitue un inconvénient.

L'invention concerne plus particulièrement un générateur de gaz pyrotechnique, comme décrit dans le document US 2006/0005734 A.

WO 01/89885, WO 2004/091981 et FR 05 12745, au nom de la demanderesse, décrivent des générateurs de gaz comprenant un corps tubulaire allongé intégrant :
- une chambre primaire pour le stockage et la combustion d'un composé pyrotechnique primaire ; la chambre primaire est formée par un premier tronçon du corps tubulaire, lequel tronçon est fermé axialement par une paroi épaisse percée d'une tuyère d'expulsion des produits de combustion du composé primaire ;
- une chambre secondaire pour le stockage et la décomposition d'un composé secondaire, les composés primaire et secondaire formant la charge explosible du générateur de gaz ; la chambre secondaire est formée par un deuxième tronçon du corps tubulaire, fermé axialement par une grille (ou paroi) présentant une ouverture d'entrée des produits de combustion du composé primaire,
- une zone de stabilisation qui, en fonctionnement, communique au moins avec la chambre secondaire et avec l'extérieur du générateur de gaz pour la libération des gaz générés ; la zone de stabilisation est formée par un troisième tronçon du corps tubulaire;
- un système d'allumage électrique adapté pour amorcer la combustion du composé primaire ; ce système d'allumage est au moins partiellement inséré dans la chambre primaire. Si nécessaire, en vue d'une meilleure reproductibilité quelle que soit la position du générateur de gaz lors de son déclenchement, le composé primaire est conditionné dans un cabochon inséré dans la chambre primaire et fixé contre le système d'allumage, de façon à concentrer le composé primaire à proximité du système d'allumage (notamment lorsque le volume de la chambre primaire est significativement supérieur au volume occupé par le composé primaire) ; ce cabochon est intégralement et instantanément détruit par l'allumage du composé primaire.

La réception, par le système d'allumage, d'une charge électrique prédéterminée amorce la combustion du composé primaire dans la chambre primaire. Les produits (gazeux) de combustion du composé primaire sont expulsés de la chambre primaire et pénètrent dans la zone de stabilisation par la tuyère d'expulsion, puis dans la chambre secondaire par l'ouverture d'entrée, en formant un jet dit jet primaire. Ce jet primaire vient frapper le composé secondaire, entraînant son craquage et sa décomposition. Une réaction d'oxydoréduction, dite post-combustion, s'opère entre des produits de combustion du composé primaire et/ou des produits de décomposition du composé secondaire. Les gaz générés s'échappent du générateur de gaz en passant par la zone de stabilisation.

Les composés primaire et secondaire sont choisis de façon à ce que le jet primaire "pilote" la décomposition du composé secondaire, ce dernier fournissant l'essentiel des gaz générés. A cette fin :
- le composé secondaire est un composé dont la décomposition autonome et totale nécessite, dans des conditions normales de fonctionnement du générateur de gaz, un temps au moins trois fois supérieur -et de préférence au moins dix fois supérieur- à une durée maximale de mission du générateur de gaz ; en particulier, le composé secondaire peut être un composé dont la décomposition n'est pas autoentretenue dans des conditions normales de fonctionnement du générateur de gaz (le temps nécessaire à sa décomposition autonome et totale est dans ce cas considéré comme étant infini) ;
- le composé primaire est un composé pyrotechnique dont la combustion est autoentretenue et génère des produits de combustion énergétiques (sous forme de jet primaire) possédant une énergie suffisante pour permettre et entretenir la décomposition du composé secondaire sur la durée maximale de mission du générateur de gaz. En d'autres termes, le composé primaire est un composé pyrotechnique apte à brûler seul et rapidement une fois allumé, et à générer un jet primaire très énergétique. La vitesse et la durée totale de décomposition du composé secondaire dépendent essentiellement du composé primaire et notamment de sa nature, de sa quantité initiale, de sa loi de combustion et du débit d'expulsion de ses produits de combustion.

La quantité de composé secondaire est choisie en fonction du volume de gaz à produire. Le composé secondaire comprend par exemple principalement du nitrate d'ammonium, apte à générer un important volume de gaz en se décomposant et, si nécessaire, à oxyder les produits de combustion du composé primaire de façon à limiter la quantité de gaz toxiques susceptibles de s'échapper du générateur de gaz.

La nature et la quantité de composé primaire sont choisies en fonction du débit de libération des gaz et de la durée maximale de mission souhaités. Le composé primaire peut être un propergol double base (à base de nitrocellulose et de nitroglycérine) et/ou un propergol composite (comprenant un liant organique et une charge oxydante) et/ou une poudre balistique de type Lova.

Les poudres balistiques de type Lova sont particulièrement appréciées pour leur stabilité et leur faible sensibilité à l'environnement (température, hygrométrie...). De plus, contrairement aux propergols composites, elles ne génèrent aucune poussière. En revanche, leur combustion s'effectue à pression élevée (cette combustion reste très difficile à maîtriser à des pressions inférieures à 500 bars) et leur vitesse de combustion est très dépendante de la pression. Afin de "lisser" quelque peu cette vitesse de combustion, la chambre primaire est volontairement surdimensionnée, son volume relativement important ayant pour effet de "tamponner" les variations de pression y survenant.

Les inventeurs ont constaté que, indépendamment de la nature du composé primaire utilisé et du volume de la chambre primaire :
- un tel générateur de gaz libère une quantité de gaz toxiques, issus de la combustion du composé primaire et/ou de la décomposition du composé secondaire, supérieure à celle qui devrait théoriquement subsister à l'issue de la post-combustion ;
- il reste, en fin de fonctionnement, des particules de composé primaire imbrûlées ; le rendement de combustion du composé primaire n'est donc pas maximal, ce qui oblige à prévoir une quantité de composé primaire supérieure à celle théoriquement nécessaire, et augmente plus encore les émissions toxiques ;
- même en tenant compte des particules imbrûlées susmentionnées, il est nécessaire de prévoir une quantité de composé primaire supérieure à celle strictement nécessaire pour décomposer le composé secondaire ;
- la combustion du composé primaire n'étant pas complète, le volume de gaz produit par le générateur de gaz et sa durée de fonctionnement dépendent de la quantité de composé réellement brûlée et peuvent donc légèrement varier en fonction des conditions de fonctionnement du générateur de gaz.

En outre, dans le cas où le composé primaire est une poudre balistique de type Lova et où le volume de la chambre primaire est volontairement surdimensionné :
- le générateur de gaz est plus encombrant, ce qui complique son intégration dans le système auquel il est destiné et limite les possibilités d'application,
- les parois de la chambre primaire subissent des efforts plus importants (ces efforts étant proportionnels à l'aire des parois, pour une pression donnée), qui obligent à les renforcer ; le générateur de gaz obtenu est donc également plus lourd ;
- le rendement de combustion du composé primaire est pénalisé par l'important volume de la chambre primaire, ce qui oblige à augmenter davantage la quantité de composé primaire (et donc également le volume de la chambre primaire).

L'invention vise à pallier ces inconvénients, en offrant un générateur de gaz amélioré par rapport aux générateurs de l'art antérieur, et notamment un générateur de gaz plus léger, plus compact et aux performances maîtrisées.

Un objectif de l'invention est en particulier de fournir un générateur de gaz dans lequel la combustion du composé primaire est plus régulière et présente un rendement amélioré par rapport aux générateurs de l'art antérieur. L'invention vise ainsi à réduire la quantité de composé primaire nécessaire pour décomposer une quantité de composé secondaire donnée.

Un objectif de l'invention est en particulier de fournir un générateur de gaz plus compact et dans lequel le composé primaire peut être une poudre balistique de type Lova.

Un autre objectif de l'invention est de fournir un générateur de gaz dans lequel le composé primaire peut être un propergol composite classique, et par exemple un propergol composite dont la balance oxygène a été ajustée, en dépit des éventuelles poussières que ce type de propergol génère.

Un autre objectif de l'invention est de fournir un générateur de gaz générant une quantité de gaz toxiques moindre et conforme aux diverses réglementations en vigueur en matière d'émissions toxiques.

Un autre objectif de l'invention est de fournir un générateur de gaz dont la fabrication répond à une logique de sous-ensembles.

Un autre objectif de l'invention est de fournir un générateur de gaz moins onéreux.

Pour ce faire, l'invention concerne un générateur de gaz comprenant un corps tubulaire intégrant :
- une chambre, dite chambre primaire, de stockage et de combustion d'un composé pyrotechnique dit composé primaire, ladite chambre primaire présentant au moins une tuyère d'expulsion adaptée pour permettre l'expulsion des produits de combustion du composé primaire en un jet, dit jet primaire, suivant une direction axiale du corps tubulaire,
- un ensemble, dit système d'allumage, adapté pour amorcer la combustion du composé primaire à réception d'un signal prédéterminé,
- une autre chambre, dite chambre secondaire, de stockage et de décomposition d'un composé dit composé secondaire, les composés primaire et secondaire étant adaptés pour que le(s) jet(s) primaire(s) pilote(nt) la décomposition du composé secondaire, au moins une partie de la chambre secondaire s'étendant dans le prolongement axial de la chambre primaire, la chambre secondaire présentant, en fonctionnement et pour chaque tuyère d'expulsion de la chambre primaire, une ouverture d'entrée du jet primaire correspondant, ménagée en regard de ladite tuyère d'expulsion selon la direction axiale,
- au moins une zone dite zone de stabilisation, qui, en fonctionnement, communique au moins avec la chambre secondaire et avec l'extérieur du générateur de gaz pour la libération des gaz générés.

A noter que, lorsque la chambre primaire présente une pluralité de tuyères d'expulsion délivrant des jets primaires selon la direction axiale, une même ouverture d'entrée de la chambre secondaire peut être associée à plusieurs tuyères d'expulsion (pour le passage de plusieurs jets primaires par cette ouverture). En variante, la chambre secondaire présente autant d'ouvertures d'entrée distinctes que de tuyères d'expulsion.

Dans toute la suite, le générateur de gaz est décrit dans un repère intrinsèque de coordonnées cylindriques, dont l'axe principal est parallèle à la direction axiale du corps tubulaire (c'est-à-dire à la direction du ou des jets primaires) et correspond par exemple à un axe central dudit corps. Les termes "direction radiale" désignent par conséquent une direction orthogonale à la direction axiale ; le terme "radialement" signifie "selon une direction radiale" ; et les termes "dimension radiale" désignent une dimension selon une direction radiale.

De préférence, le générateur de gaz comprend un corps tubulaire allongé, c'est-à-dire présentant une dimension axiale maximale supérieure -et de préférence très supérieure- à sa dimension radiale maximale. Mais il n'est pas exclu que le générateur de gaz présente un corps tubulaire plus aplati, par exemple en forme de galette ou de palet, dont la dimension axiale maximale est inférieure ou égale à la dimension radiale maximale.

L'invention réside dans le rapprochement de la chambre primaire et de la chambre secondaire.

Selon l'invention :
- le générateur de gaz comprend au moins une zone de stabilisation dont au moins une partie s'étend dans le prolongement axial de la chambre secondaire de telle sorte que la chambre primaire, la chambre secondaire et ladite zone de stabilisation se succèdent dans cet ordre selon la direction axiale ; de préférence, cette zone de stabilisation s'étend entièrement dans le prolongement axial de la chambre secondaire ; en variante, elle se prolonge radialement à la périphérie de la chambre secondaire ;
- la chambre secondaire et ladite zone de stabilisation sont séparées par une paroi (qui peut être constituée par une grille), dite paroi d'évacuation, dans laquelle sont ménagées des ouvertures, dites ouvertures d'évacuation, pour l'évacuation dans la zone de stabilisation des gaz générés ;
- une butée, dite bouclier, est formée au niveau de la paroi d'évacuation en regard de chaque tuyère d'expulsion selon la direction axiale, lequel bouclier est apte à résister à la pression du jet primaire correspondant et à réfléchir ledit jet.

Dans cette version, la chambre primaire et la chambre secondaire se succèdent axialement ; il est donc possible de les rapprocher complètement, en les accolant selon la direction axiale : la distance séparant chaque tuyère d'expulsion de l'ouverture d'entrée associée est dans ce cas nulle. En d'autres termes, chaque tuyère d'expulsion s'ouvre directement dans la chambre secondaire. Il n'est cependant pas exclu de laisser, si nécessaire, une faible distance entre chaque tuyère d'expulsion et l'ouverture d'entrée associée. A noter que la chambre primaire peut être formée par un premier tronçon du corps tubulaire ou par une enceinte de moindre diamètre (ou dimension radiale) insérée dans un premier tronçon du corps tubulaire ; de préférence, la chambre secondaire et la zone de stabilisation sont formées par un deuxième et un troisième tronçon du corps tubulaire, qui se succèdent axialement.

Le bouclier est réalisé par une portion de la paroi d'évacuation renforcée par une pièce de renfort. En variante, le bouclier est réalisé par une extrémité axiale d'une pièce de renfort qui traverse la paroi d'évacuation et se substitue à cette dernière dans le prolongement du jet primaire. Dans les deux cas, la pièce de renfort est avantageusement agencée dans la zone de stabilisation de façon à venir en butée contre un fond du corps tubulaire du générateur de gaz. En variante, la pièce de renfort, agencée dans la zone de stabilisation, constitue elle-même le fond du corps tubulaire.

L'invention a donc consisté à modifier la structure des générateurs antérieurs décrits dans WO 01/89885, WO 2004/091981 et FR 05 12745 de façon à réduire la distance séparant chaque tuyère d'expulsion de la chambre primaire et l'ouverture d'entrée associée de la chambre secondaire. Pour ce faire, la zone de stabilisation -si elle est unique- a été aménagée après (selon la direction axiale et dans le sens du ou des jets primaires) la chambre secondaire moyennant l'ajout d'un bouclier.

Ces modifications structurelles ont permis d'obtenir un meilleur rendement de combustion dans la chambre primaire et un meilleur rendement de décomposition dans la chambre secondaire, de diminuer ainsi les quantités de composés primaire et secondaire nécessaires pour produire un volume de gaz donné, et de réduire les émissions toxiques.

Les inventeurs expliquent a posteriori ces résultats par l'existence, dans les générateurs antérieurs, de phases transitoires initiale et finale, respectivement en début et en fin de combustion du composé primaire. En début de combustion du composé primaire, le jet primaire présente un débit insuffisant pour pouvoir percer directement l'opercule obturant l'ouverture d'entrée de la chambre secondaire. En fin de combustion du composé primaire, le jet primaire s'affaiblit et ne présente plus une énergie suffisante pour décomposer complètement la totalité du composé secondaire. Pour obtenir une décomposition à la fois complète (en terme de degré d'oxydoréduction) et totale (en terme de quantité de composé secondaire décomposé) du composé secondaire, un excès de composé primaire doit être prévu.

A l'inverse, dans un générateur selon l'invention, la proximité entre chaque tuyère d'expulsion et l'ouverture d'entrée associée limite considérablement la déperdition d'énergie (dans la zone de stabilisation) dont souffre le jet primaire dans les générateurs antérieurs. Le jet primaire selon l'invention est ainsi apte, dès sa génération, à percer l'opercule obturant l'ouverture d'entrée de la chambre secondaire et à maintenir, jusqu'à son extinction, un niveau d'énergie suffisant dans ladite chambre secondaire pour décomposer complètement et totalement le composé secondaire. L'intégralité des produits de combustion du composé primaire pénètre dans la chambre secondaire pour y décomposer le composé secondaire et subir éventuellement une post-combustion, avant de s'échapper du générateur de gaz. Il est donc possible de diminuer la quantité de composé primaire à prévoir, pour une quantité de composé secondaire donnée (c'est-à-dire pour un volume de gaz à produire donné), et ce de façon significative. Cette diminution de la quantité de composé primaire autorise également à :
- réduire le volume de la chambre primaire, et obtenir ainsi un générateur de gaz non seulement plus compact mais aussi plus léger (l'ossature résistante du générateur pouvant être amincie). A noter que cette réduction du volume de la chambre primaire favorise l'allumage et la combustion du composé primaire, et limite la quantité de particules imbrûlées et la toxicité associée. Il en résulte une meilleure reproductibilité (en d'autres termes, les performances du générateur de gaz sont sensiblement identiques quelles que soient les conditions de fonctionnement) et la possibilité de diminuer plus encore la quantité de composé primaire à prévoir pour générer un volume de gaz donné,
- utiliser des propergols composites de formulations classiques -et en particulier ceux utilisés dans les générateurs de gaz destinés à la sécurité automobile-, les éventuelles poussières résultantes étant produites dans des quantités suffisamment faibles pour ne pas perturber le fonctionnement du générateur de gaz ni risquer d'endommager son environnement (et notamment le coussin gonflable de sécurité auquel le générateur de gaz est associé dans certaines applications du domaine automobile),
- utiliser des poudres balistiques de type Lova tout en disposant d'un générateur de gaz compact et léger (le volume de la chambre primaire, même surdimensionné, étant significativement plus petit que celui des générateurs antérieurs).

En outre, dans un générateur selon l'invention, les émissions toxiques sont considérablement réduites, compte tenu à la fois de l'utilisation d'une plus faible quantité de composé primaire et d'une réaction d'oxydoréduction complète et totale des produits de combustion du composé primaire et des produits de décomposition du composé secondaire.

Enfin, l'invention permet de réduire considérablement le coût de revient d'un générateur de gaz, étant rappelé que les composés utilisés à titre de composé primaire selon l'invention sont particulièrement onéreux et constituent une part essentielle de ce coût.

A noter qu'il est possible d'utiliser, à titre de composé primaire, non seulement un composé dont la balance oxygène est négative et dont au moins une partie des produits de combustion réducteurs toxiques (tels que le monoxyde de carbone) doit être oxydée par des produits de décomposition du composé secondaire, mais aussi un composé dont la balance oxygène est sensiblement nulle et dont les produits de combustion réducteurs toxiques peuvent être oxydés, en partie ou en totalité, par d'autres produits de combustion du composé primaire. En tout état de cause, les caractéristiques thermodynamiques (température et composition) des gaz générés sortant du générateur de gaz ne dépendent pas des caractéristiques thermodynamiques des produits du seul composé primaire ; elles dépendent uniquement des caractéristiques thermodynamiques du mélange formé par les produits de combustion du composé primaire et les produits de décomposition du composé secondaire. En d'autres termes, elles dépendent de la composition de la charge explosible constituée par le composé primaire et le composé secondaire, considérée dans sa globalité. Cette charge explosible doit avoir de préférence une balance oxygène globale nulle ou négative. En fonction du composé primaire, le composé secondaire peut être un composé dont la balance oxygène est positive, nulle ou négative. A noter toutefois que la contribution du composé primaire à la balance oxygène globale est relativement faible, compte tenu de la faible proportion massique dudit composé primaire dans la charge explosible. Les réactions d'oxydoréduction survenant entre les produits de combustion du composé primaire et/ou les produits de décomposition du composé secondaire ont lieu pour partie dans la chambre secondaire et pour partie dans la ou les zones de stabilisation.

Avantageusement et selon l'invention, la chambre primaire présente une longueur interne maximale L, selon une direction longitudinale de ladite chambre, et une largeur interne maximale Φ, selon une direction transversale orthogonale à la direction longitudinale, dont le rapport L/Φ est supérieur à 1,5, le système d'allumage étant agencé à une extrémité longitudinale de la chambre primaire. De préférence, la direction longitudinale de la chambre primaire coïncide avec la direction axiale du corps tubulaire du générateur de gaz. A noter que lorsque la chambre primaire est cylindrique de section circulaire, sa largeur Φ correspond au diamètre interne du cylindre.

En d'autres termes, la chambre primaire d'un générateur selon l'invention présente une largeur ou un diamètre réduit(e) comparé aux générateurs antérieurs. La présence de particules de composé primaire autour radialement (c'est-à-dire selon toute direction transversale de la chambre) du système d'allumage est par conséquent limitée. L'énergie fournie par le système d'allumage est donc quasiment intégralement transmise au composé primaire selon la direction longitudinale de la chambre primaire (et donc généralement selon la direction axiale du corps tubulaire du générateur de gaz). Il en résulte que la qualité de l'allumage du composé primaire dépend peu des conditions de fonctionnement du générateur de gaz, et notamment de son environnement et de sa position. Le générateur de gaz selon l'invention est plus fiable. En outre, on obtient un rendement de combustion du composé primaire proche de 100% (quantité de particules imbrûlées négligeable voire nulle), qui autorise une réduction supplémentaire de la quantité de composé primaire à prévoir pour un volume de gaz à produire donné.

Avantageusement et selon l'invention, le générateur de gaz présente une ou plusieurs des caractéristiques suivantes :
- le composé primaire représente moins de 16% en poids, et de préférence moins de 10% en poids, de la charge explosible formée par les composés primaire et secondaire ;
- la chambre primaire contient moins de 4 grammes, et de préférence moins de 2 grammes, de composé primaire ;
- le composé primaire est choisi parmi : les propergols double base ; les propergols composites (quelle que soit leur balance oxygène) ; en particulier, les propergols composites intégrant au moins un additif apte à ajuster la balance oxygène du composé primaire ; les poudres balistiques de type Lova ; les compositions pyrotechniques à base de nitrate basique de cuivre et de nitrate de guanidine ; les composés précédemment cités intégrant de plus un ou plusieurs additifs ; des mélanges ou associations des composés précédemment cités. A noter que chaque additif que contient éventuellement le composé primaire peut être associé ou mélangé au(x) composant(s) de base ;
- le composé secondaire est choisi parmi : un composant de base choisi parmi le nitrate d'ammonium, le nitrate de guanidine, le nitrate basique de cuivre ; des mélanges ou associations de ces composants de base ; l'un des composants de base précédemment cités auquel est mélangé ou associé au moins un additif apte à ajuster la balance oxygène du composé secondaire ou de la charge explosible (formée par les composés primaire et secondaire) ; l'un des composants de base précédemment cités auquel est mélangé ou associé au moins un additif choisi parmi les dérivés de la guanidine (nitro-guanidine, nitrate de guanidine...), les polyesters, l'acétate d'ammonium, l'oxamide ou l'oxamide d'ammonium ou un dérivé de ces derniers, l'urée ou un dérivé de celle-ci (nitro-urée par exemple), l'hexogène, l'octogène, l'aminotétrazole...; l'un des composants de base précédemment cités auquel est mélangé ou associé au moins un additif apte, dans sa forme initiale et/ou dans ses produits de décomposition, à absorber une partie de l'énergie des produits de combustion du composé primaire et à augmenter ainsi la température du composé secondaire ; des mélanges ou associations des composés précités.

Les termes "mélangé" et "mélange" employés précédemment signifient que les deux composants en présence (par exemple nitrate d'ammonium et additif) sont intimement mêlés de façon à former un composé homogène, tandis que les termes "associé" ou "association" signifient que les deux composants en présence sont agencés par couches distinctes de façon à former un composé hétérogène.

L'invention s'étend à un système à génération de gaz comprenant un générateur de gaz selon l'invention et une enceinte gonflable (telle qu'un coussin gonflable), agencés de manière à ce que les gaz libérés par le générateur de gaz puissent gonfler ladite enceinte. L'invention s'étend également à un système à génération de gaz comprenant un générateur de gaz selon l'invention et un vérin, agencés de manière à ce que les gaz libérés par le générateur de gaz puissent pressuriser le vérin. Ces deux systèmes peuvent notamment être intégrés dans un véhicule automobile pour garantir la sécurité des occupants du véhicule.

L'invention concerne également un générateur de gaz et un système à génération de gaz caractérisés en combinaison par tout ou partie des caractéristiques mentionnées ci-dessus et ci-après.

D'autres buts, caractéristiques et avantages de l'invention apparaîtront à la lecture de la description suivante qui se réfère aux figures annexées représentant des modes de réalisation préférentiels de l'invention, donnés uniquement à titre d'exemples non limitatifs, et dans lesquelles :
- la figure 1 est une vue schématique en coupe longitudinale d'un premier mode de réalisation de l'invention,
- la figure 2 est une vue schématique en coupe longitudinale d'un deuxième mode de réalisation de l'invention.

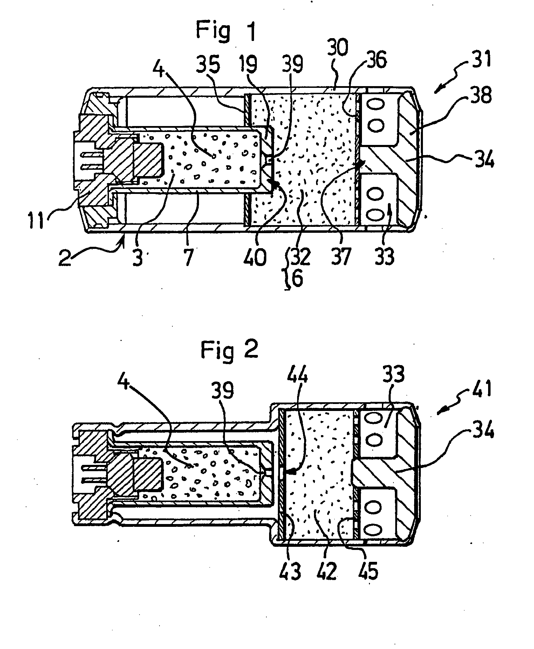

La figure 1 illustre un générateur de gaz 31 selon l'invention, dont le corps tubulaire 2 allongé comprend un tube 30 qui intègre successivement selon la direction axiale : un initiateur 11 ; une chambre primaire 3 ; une chambre secondaire 32 contenant le composé secondaire 6 ; une zone de stabilisation 33; une pièce de renfort 34 dite enclume.

L'initiateur 11 comprend, de façon usuelle : une embase généralement moulée; un connecteur électrique par lequel il peut recevoir une charge électrique en vue du déclenchement du générateur de gaz ; un filament ; une charge initiatrice et une charge renforçatrice ou amplificatrice encapsulées dans un cabochon qui est en contact direct avec le composé primaire 4. Cet initiateur 11 pourrait être remplacé par tout type de système d'allumage, apte à être déclenché par un signal électrique ou encore pneumatique, hydraulique, mécanique, optique, électromagnétique... En particulier, l'initiateur 11 pourrait être remplacé par un système d'allumage à laser.

Selon l'invention, la chambre primaire 3 est délimitée par l'initiateur 11 et par une enceinte tubulaire 7 comportant une paroi périphérique cylindrique de section circulaire, dont le diamètre externe est notablement inférieur (en l'exemple illustré, entre 1,5 et 2 fois inférieur) au diamètre interne du corps tubulaire 2. L'enceinte 7 comprend, à l'opposé de l'initiateur 11, une paroi d'extrémité axiale 19 qui s'étend transversalement et est percée d'un orifice 39 faisant office de tuyère d'expulsion des produits de combustion du composé primaire 4. La tuyère d'expulsion 39 de la chambre primaire du générateur 31 est constituée d'un conduit convergent et d'un conduit cylindrique.;

La chambre secondaire 32 est délimitée, à sa périphérie, par un tronçon du tube 30. Elle est de plus axialement délimitée, d'une part par une grille 36, et d'autre part par une paroi de séparation 35 et par l'enceinte 7 de la chambre primaire, et notamment par la paroi d'extrémité 19 de ladite enceinte. La chambre primaire 3 s'étend ainsi en partie dans le tronçon de tube délimitant la chambre secondaire. La tuyère d'expulsion 39 (initialement obturée par un opercule non représenté) s'ouvre donc directement dans la chambre secondaire 32. En d'autres termes et selon l'invention, la distance entre ladite tuyère d'expulsion et l'ouverture d'entrée 40 de la chambre secondaire (par laquelle pénètre le jet primaire) est nulle. Le composé secondaire 6 est de préférence un solide divisé : poudre et/ou pastilles et/ou brins et/ou feuilles. Il est avantageusement conditionné à l'intérieur d'un sac souple étanche (non représenté), formé par un film ou un complexe de films, par exemple en matière plastique ou en aluminium ou tout autre matière compatible. Ce sac obture initialement l'ensemble des ouvertures de la grille 36. Si tel n'est pas le cas, les ouvertures d'évacuation de la grille 36 sont initialement obturées par un ou plusieurs opercules. Le composé secondaire 6 comprend de préférence du nitrate d'ammonium mélangé ou associé à un ou plusieurs dérivés de la guanidine (nitrate de guanidine, nitroguanidine...) ou à du nitrate basique de cuivre, de façon à présenter une balance oxygène nulle ou légèrement négative.

La zone de stabilisation 33 est délimitée par un tronçon du tube 30 percé de trous de libération des gaz, par la grille 36 et par l'enclume 34. La grille 36 réalise une paroi d'évacuation entre la chambre secondaire 32 et la zone de stabilisation 33 ; elle est renforcée par l'enclume 34 dans le prolongement du jet primaire, c'est-à-dire sur une portion centrale en regard, selon la direction axiale, de la tuyère d'expulsion 39 de la chambre primaire. L'enclume 34 comprend un socle 38 formant le fond du corps tubulaire, et un plot qui traverse axialement la zone de stabilisation 33. La portion de la grille 36 située dans le prolongement du jet primaire et ledit plot forment un bouclier 37 apte à résister à la pression du jet primaire et à réfléchir ce dernier (à noter que le jet primaire possède une vitesse supersonique et une température supérieure à 2000°C). Dès sa formation, le jet primaire traverse la chambre secondaire puis est réfléchi par le bouclier 37. La décomposition du composé secondaire est ainsi amorcée du côté de la grille 36. Le front de décomposition progresse de la grille 36 vers la paroi de séparation 35. L'évacuation (hors de la chambre secondaire 32) des gaz générés est ainsi facilitée et tout risque de colmatage des ouvertures d'évacuation de la grille 36 par des particules solides de composé secondaire est ainsi écarté.

Le générateur de gaz 41 illustré sur la figure 2 diffère du générateur 31 en ce que sa chambre secondaire 42 est délimitée, du côté de la chambre primaire, uniquement par une paroi de séparation 43, qui s'étend sur toute une section transversale du corps tubulaire. La chambre primaire ne pénètre donc pas dans la chambre secondaire 42. La paroi de séparation 43 présente une ouverture d'entrée 44 centrale, qui, en l'exemple, est située à moins de 5 mm de la tuyère d'expulsion 39. Le générateur de gaz 41 diffère aussi du générateur 31 en ce que le tronçon de son corps tubulaire dans lequel est logé le microgénérateur (initiateur + chambre primaire) présente un diamètre réduit, qui limite l'encombrement du générateur de gaz. Enfin, la grille 45 séparant la chambre secondaire 42 et la zone de stabilisation 33 présente une lumière centrale obturée par le plot de l'enclume 34. Dans ce mode de réalisation, l'enclume 34 se substitue donc à la paroi 45 dans le prolongement du jet primaire.

Il est à noter que, la fabrication des générateurs de gaz 31 et 41 répond à une logique de sous-ensembles. La chambre primaire 3 et l'initiateur 11 forment un sous-ensemble compact d'un seul tenant, inséré dans le corps tubulaire 2. Ce sous-ensemble réalise un microgénérateur. En pratique, il s'agit avantageusement d'un microgénérateur connu disponible dans le commerce. Par ailleurs, le composé secondaire est conditionné dans un sac souple, qui forme un sous-ensemble facile à manipuler, inséré dans le corps tubulaire 2. La fabrication des générateurs de gaz 31 et 41 en est extrêmement simplifiée.

En outre, dans les deux exemples précédemment décrits, la pression que subit en fonctionnement le corps du générateur de gaz correspond à la pression régnant à l'intérieur de la chambre secondaire et de la zone de stabilisation. De préférence, cette pression est inférieure à 250 bars. Le corps tubulaire peut donc être réalisé en un matériau peu résistant ; le corps tubulaire 2 des générateurs de gaz 31 et 41 peut être en aluminium ou en un matériau polymérique . A noter que, selon le composé primaire choisi, la pression régnant à l'intérieur de la chambre primaire peut, à l'inverse, être relativement élevée (et notamment supérieure à 500 bars pour certains composés). L'enceinte 7 est dimensionnée et réalisée dans un matériau adapté pour pouvoir supporter la pression de combustion du composé primaire choisi.

## Revendications

1. Générateur de gaz comprenant un corps tubulaire (30) intégrant :
- une chambre (3), dite chambre primaire, de stockage et de combustion d'un composé pyrotechnique dit composé primaire, ladite chambre primaire présentant au moins une tuyère d'expulsion (39) adaptée pour permettre l'expulsion des produits de combustion du composé primaire en un jet, dit jet primaire, suivant une direction axiale du corps tubulaire,
- un ensemble (11), dit système d'allumage, adapté pour amorcer la combustion du composé primaire à réception d'un signal prédéterminé,
- une autre chambre (32), dite chambre secondaire, de stockage et de décomposition d'un composé (6) dit composé secondaire, les composés primaire et secondaire étant adaptés pour que le(s) jet(s) primaire(s) pilote(nt) la décomposition du composé secondaire, au moins une partie de la chambre secondaire s'étendant dans le prolongement axial de la chambre primaire, la chambre secondaire présentant, en fonctionnement et pour chaque tuyère d'expulsion de la chambre primaire, une ouverture (40) d'entrée du jet primaire correspondant, ménagée en regard de ladite tuyère d'expulsion selon la direction axiale,
- au moins une zone (33) dite zone de stabilisation, qui, en fonctionnement, communique au moins avec la chambre secondaire et avec l'extérieur du générateur de gaz pour la libération des gaz générés,
- au moins une zone de stabilisation (33) dont au moins une partie s'étend dans le prolongement axial de la chambre secondaire (32) de telle sorte que la chambre primaire (3 ; 51), la chambre secondaire et ladite zone de stabilisation se succèdent dans cet ordre selon la direction axiale,
- la chambre secondaire (32) et ladite zone de stabilisation (33) étant séparées par une paroi (36), dite paroi d'évacuation, dans laquelle sont ménagées des ouvertures, dites ouvertures d'évacuation, pour l'évacuation dans la zone de stabilisation des gaz générés,
- une butée (37), dite bouclier, est formée au niveau de la paroi d'évacuation en regard de chaque tuyère d'expulsion (39) selon la direction axiale, lequel bouclier est apte à résister à la pression du jet primaire correspondant et à réfléchir ledit jet, **caractérisé en ce que** l'ensemble comprend une charge initiatrice et une charge renforçatrice ou amplificatrice encapsulées dans un cabochon qui est en contact direct avec le composé primaire et **en ce que** le bouclier est réalisé soit par une portion de la paroi d'évacuation renforcée par une pièce de renfort (34) dite enclume,
soit par extrémité axiale d'une pièce de renfort (34), dite enclume, qui traverse la paroi d'évacuation et se substitue à cette dernière dans le prolongement du jet primaire.

2. Générateur de gaz selon la revendication 1, **caractérisé en ce que** l'enclume est agencée dans la zone de stabilisation et constitue un fond du corps tubulaire du générateur de gaz.

3. Générateur de gaz selon la revendication 1 ou la revendication 2 **caractérisé en ce que** la chambre primaire (3) présente une longueur interne maximale L, selon une direction longitudinale de ladite chambre, et une largeur interne maximale Φ, selon une direction transversale orthogonale à la direction longitudinale, dont le rapport L/Φ est supérieur à 1,5, le système d'allumage étant agencé à une extrémité longitudinale de la chambre primaire.

4. Générateur de gaz selon l'une des revendications 1 à 3, **caractérisé en ce que** le composé primaire (4) représente moins de 16% en poids de la charge explosible formée par les composés primaire et secondaire.

5. Générateur de gaz selon la revendication 4, **caractérisé en ce que** le composé primaire (4) représente moins de 10% en poids de la charge explosible formée par les composés primaire et secondaire.

6. Générateur de gaz selon l'une des revendications 1 à 5, **caractérisé en ce que** la chambre primaire contient moins de 4 grammes de composé primaire (4).

7. Générateur de gaz selon la revendication 6, **caractérisé en ce que** la chambre primaire contient moins de 2 grammes de composé primaire (4).

8. Générateur de gaz selon l'une des revendications 1 à 7, **caractérisé en ce que** le composé primaire (4) est choisi parmi : les propergols double base ; les propergols composites ; les propergols composites intégrant au moins un additif apte à ajuster la balance oxygène du composé primaire ; les poudres balistiques de type Lova ; les compositions pyrotechniques à base de nitrate basique de cuivre et de nitrate de guanidine ; les composés précédemment cités intégrant de plus un ou plusieurs additifs ; des mélanges ou associations des composés précédemment cités.

9. Générateur de gaz selon l'une des revendications 1 à 18, **caractérisé en ce que** le composé secondaire (6) est choisi parmi : un composant de base choisi parmi le nitrate d'ammonium, le nitrate de guanidine, le nitrate basique de cuivre ; des mélanges ou associations de ces composants de base ; l'un des composants de base précédemment cités auquel est mélangé ou associé au moins un additif apte à ajuster la balance oxygène du composé secondaire ou de la charge explosible ; l'un des composants de base précédemment cités auquel est mélangé ou associé au moins un additif choisi parmi les dérivés de la guanidine, les polyesters, l'acétate d'ammonium, l'oxamide ou l'oxamide d'ammonium ou un dérivé de ces derniers, l'urée ou un dérivé de celle-ci, l'hexogène, l'octogène, l'aminotétrazole ; l'un des composants de base précédemment cités auquel est mélangé ou associé au moins un additif apte, dans sa forme initiale et/ou dans ses produits de décomposition, à absorber une partie de l'énergie des produits de combustion du composé primaire ; des mélanges ou associations des composés précités.

10. Système à génération de gaz comprenant un générateur de gaz selon l'une des revendications 1 à 9 et une enceinte gonflable; agencés de manière à ce que les gaz libérés par le générateur de gaz puissent gonfler ladite enceinte.

11. Système à génération de gaz comprenant un générateur de gaz selon l'une des revendications 1 à 9 et un vérin, agencés de manière à ce que les gaz libérés par le générateur de gaz puissent pressuriser le vérin.

## Patentansprüche

1. Gasgenerator mit einem röhrenförmigen Körper (30), umfassend:
- eine Kammer (3), bezeichnet als primäre Lagerungs- und Verbrennungskammer einer pyrotechnischen Komponente, bezeichnet als primäre Komponente, wobei die genannte primäre Kammer wenigstens eine Ausstoßdüse (39) aufweist, die geeignet ist, um das Ausstoßen der Verbrennungsprodukte der primären Komponente in einer Flamme, bezeichnet als primäre Flamme, gemäß einer axialen Richtung des röhrenförmigen Körpers zu erlauben,
- eine Struktur (11) bezeichnet als Zündsystem, die geeignet ist, um die Verbrennung der primären Komponente bei Erhalt eines vorbestimmten Signals zu zünden,
- eine andere Kammer (32), bezeichnet als sekundäre Lagerungs- und Zersetzungskammer einer Komponente (6), bezeichnet als sekundär, wobei die primären und sekundären Komponenten dazu geeignet sind, dass die primäre(n) Flamme(n) die Zersetzung der sekundären Komponente steuert / steuern, wobei sich wenigstens ein Teil der sekundären Kammer in der axialen Verlängerung der primären Kammer erstreckt, wobei die sekundäre Kammer im Betrieb und für jede Ausstoßdüse der primären Kammer eine Eingangsöffnung (40) der entsprechenden primären Flamme aufweist, die gegenüber der genannten Ausstoßdüse gemäß der axialen Richtung ausgespart ist,
- wenigstens einen Bereich (33), bezeichnet als Stabilisierungsbereich, der im Betrieb wenigstens mit der sekundären Kammer und mit dem Außenbereich des Gasgenerators für die Freisetzung der generierten Gase in Verbindung steht,
- wenigstens einen Stabilisierungsbereich (33), von dem sich wenigstens ein Teil in der axialen Verlängerung der sekundären Kammer (32) derart erstreckt, dass die primäre Kammer (3, 51), die sekundäre Kammer und der genannte Stabilisierungsbereich in dieser Reihenfolge gemäß der axialen Richtung aufeinander folgen,
- wobei die sekundäre Kammer (32) und der genannte Stabilisierungsbereich (33) durch eine Wand (36), bezeichnet als Austragswand getrennt sind, in der Öffnungen, bezeichnet als Austragsöffnungen, für den Austrag der generierten Gase in den Stabilisierungsbereich ausgespart sind,
- einen Anschlag (37), bezeichnet als Abschirmung, der an der Austragswand gegenüber jeder Ausstoßdüse (39) gemäß der axialen Richtung gebildet ist, wobei die genannte Abschirmung geeignet ist, dem Druck der entsprechenden primären Flamme zu widerstehen und die genannte Flamme zu reflektieren, **dadurch gekennzeichnet, dass** die Struktur eine Einleitungsladung und eine Verstärkungs- oder Intensivierungsladung umfasst, die in einem Deckglas verkapselt sind, das in direktem Kontakt mit der primären Komponente ist,
wobei die Abschirmung entweder durch einen Abschnitt der Austragswand realisiert ist, die durch ein Verstärkungsstück (34), bezeichnet als Arbeitskontakt, realisiert ist,
oder durch das axiale Ende eines Verstärkungsstücks (34), bezeichnet als Arbeitskontakt, das die Austragswand durchquert und diese in der Verlängerung der primären Flamme ersetzt.

2. Gasgenerator gemäß Anspruch 1, **dadurch gekennzeichnet, dass** der Arbeitskontakt in dem Stabilisierungsbereich angeordnet ist und einen Boden des röhrenförmigen Körpers des Gasgenerators bildet.

3. Gasgenerator gemäß Anspruch 1 oder 2, **dadurch gekennzeichnet, dass** die primäre Kammer (3) eine maximale interne Länge L gemäß einer Längsrichtung der genannten Kammer und eine maximale interne Breite φ gemäß einer zur Längsrichtung orthogonalen Querrichtung, deren Verhältnis L/φ größer als 1,5 ist, aufweist, wobei das Zündsystem an einem Längsende der primären Kammer angeordnet ist.

4. Gasgenerator gemäß Anspruch 1 bis 3, **dadurch gekennzeichnet, dass** die primäre Komponente (4) weniger als 16 Gew.-% der explosionsfähigen Ladung darstellt, die von den primären und sekundären Komponenten gebildet wird.

5. Gasgenerator gemäß Anspruch 4, **dadurch gekennzeichnet, dass** die primäre Komponente (4) weniger als 10 Gew.-% der explosionsfähigen Ladung darstellt, die von den primären und sekundären Komponenten gebildet wird.

6. Gasgenerator gemäß Anspruch 1 bis 5, **dadurch gekennzeichnet, dass** die primäre Kammer weniger als 4 Gramm primäre Komponente (4) enthält.

7. Gasgenerator gemäß Anspruch 6, **dadurch gekennzeichnet, dass** die primäre Kammer weniger als 2 Gramm primäre Komponente (4) enthält.

8. Gasgenerator gemäß Anspruch 1 bis 7, **dadurch gekennzeichnet, dass** die primäre Komponente (4) ausgewählt ist aus: den Propergolen doppelter Basis; den Verbund-Propergolen; den Verbund-Propergolen, die wenigstens einen Zusatzstoff besitzen, der geeignet ist, das Sauerstoffgleichgewicht der primären Komponente anzupassen; die ballistischen Pulver vom Typ Lova; die pyrotechnischen Zusammensetzungen auf basischer Kupfernitrat- und Guanidinnitrat-Basis; die zuvor genannten Komponenten, die darüber hinaus einen oder mehrere Zusatzstoffe besitzen; Mischungen oder Verbindungen der zuvor genannten Komponenten.

9. Gasgenerator gemäß Anspruch 1 bis 8, **dadurch gekennzeichnet, dass** die sekundäre Komponente (6) ausgewählt ist aus: einer Basiskomponente, die ausgewählt ist aus Ammoniumnitrat, Guanidinnitrat, basischem Kupfernitrat; den Mischungen oder Verbindungen dieser Basiskomponenten; einer der zuvor genannten Basiskomponenten, zu der wenigstens ein Zusatzstoff hinzugemischt oder zugeordnet ist, der geeignet ist, das Sauerstoffgleichgewicht der sekundären Komponente oder der explosionsfähigen Ladung anzupassen; eine der zuvor genannten Komponenten, zu der wenigstens ein Zusatzstoff hinzugemischt oder zugeordnet wird, der aus den Derivaten von Guanidin, Polyestern, Ammoniumacetat, Oxamid oder Ammoniumoxamid oder einem Derivat derselben, Harnstoff oder einem Derivat desselben, Hexogen, Octogen, Aminotetrazol ausgewählt ist; einer der zuvor genannten Basiskomponenten, der wenigstens ein Zusatzstoff hinzugemischt oder zugeordnet wird, der geeignet ist, in seiner ursprünglichen Form und / oder in seinen Zersetzungsprodukten einen Teil der Energie der Verbrennungsprodukte der primären Komponente zu absorbieren; den Mischungen oder Zusammensetzungen der vorgenannten Komponenten.

10. System mit Gasgenerator mit einem Gasgenerator gemäß Anspruch 1 bis 9 und einer aufblasbaren Einfassung, die derart angeordnet sind, dass die vom Gasgenerator freigesetzten Gase die genannte Einfassung aufblasen können.

11. System mit Gasgenerator mit einem Gasgenerator gemäß Anspruch 1 bis 9 und einem Zylinder, die derart angeordnet sind, dass die vom Gasgenerator freigesetzten Gase den Zylinder mit Druck beaufschlagen können.

## Claims

1. A gas generator comprising a tubular body (30) including:
- a chamber (3), so-called the primary chamber, for the storage and the combustion of a pyrotechnic compound so-called a primary compound, with said primary chamber having at least one ejection nozzle (39) adapted to enable the ejection of the combustion products of the primary compound as a jet, so-called the primary jet, in an axial direction of the tubular body,
- an assembly (11), so-called an ignition system, adapted to prime the combustion of the primary compound upon receiving a predetermined signal,
- another chamber (11), so-called the secondary chamber, for the storage and the decomposition of a compound (6), so-called the secondary compound, with the primary and secondary compounds being adapted so that the primary jet(s) can control the decomposition of the secondary compound, with at least a part of the secondary chamber extending as an axial extension of the primary chamber, the secondary chamber having, in operation and for each ejection nozzle of the primary chamber, an opening (40) for the input of the corresponding primary jet, provided opposite said ejection nozzle in the axial direction,
- at least one zone (33), so-called the stabilization zone, which, in operation, communicates at least with the secondary chamber and the outside of the gas generator for releasing the generated gases,
- at least a stabilization zone (33), at least a part of which extends as an axial extension of the secondary chamber (32), so that the primary chamber (3; 51), the secondary chamber and said stabilization zone are positioned in this order in the axial direction,
- the secondary chamber (32) and said stabilization zone (33) being separated by a wall (36), so-called the discharge wall, wherein openings, so-called discharge openings are provided for discharging the generated gases into the stabilization zone,
- a stop (37), so-called a shield, is formed on the discharge wall, opposite each ejection nozzle (39) in the axial direction, and the shield is able to resist the pressure of the corresponding primary jet and to reflect such jet,
**characterized in that** the assembly comprises an initial charge and a reinforcing or enhancing charge packed in a capsule which is in direct contact with the primary compound and **in that**
the shield is made either with a portion of the discharge wall reinforced with a strengthening piece (34), so-called an anvil,
or with the axial end of a strengthening piece (34), so-called the anvil, which goes through the discharge wall and replaces the latter in the continuation of the primary jet.

2. A gas generator according to claim 1, **characterized in that** the anvil is arranged in the stabilisation zone and provides a bottom of the tubular body of the gas generator.

3. A gas generator according to claim 1 or claim 2, **characterized in that** the primary chamber (3) has a maximum inner length L, in a longitudinal direction of said chamber, and a maximum inner width Φ, in a longitudinal direction orthogonal to the longitudinal direction, the L/Φ ratio of which is greater than 1.5, with the ignition system being arranged at a longitudinal end of the primary chamber.

4. A gas generator according to one of Claims 1 to 3, **characterized in that** the primary compound (4) represents less than 16% by weight of the explosive charge formed by the primary and secondary compounds.

5. A gas generator according to claim 4, **characterized in that** the primary compound (4) represents less than 10% by weight of the explosive charge formed by the primary and secondary compounds.

6. A gas generator according to one of claims 1 to 5, **characterized in that** the primary chamber contains less than 4 grams of the primary compound (4).

7. A gas generator according to claim 6, **characterized in that** the primary chamber contains less than 2 grams of the primary compound (4).

8. A gas generator according to one of claims 1 to 7, **characterized in that** the primary compound (4) is selected from: the double-base propellants, the composite propellants, with the composite propellants including at least one additive able to adjust the oxygen balance of the primary compound; the ballistic powders of the Lova type; the base copper nitrate and guanidine nitrate based pyrotechnic compositions, with the aforementioned compounds further incorporating one or more additives; mixtures or combinations of the aforementioned compounds.

9. A gas generator according to one of claims 1 to 8, **characterized in that** the secondary compound (6) is selected from: a base component selected from ammonium nitrate, guanidine nitrate, base nitrate copper; mixtures or combinations of same base components; one of the base components mentioned above which is mixed or associated with at least one additive able to adjust the oxygen balance of the secondary compound or the explosive load; one of the aforementioned base components which is mixed with or associated with at least one additive selected from the guanidine derivatives, the polyesters, ammonium acetate, oxamide or ammonium oxamide or a derivative thereof, urea or a derivative thereof, hexogen, octogen, aminotetrazole; one of the aforementioned base components which is mixed or associated with at least one additive able, in its initial form and/or as the decomposition products thereof, to absorb a part of the energy of the combustion products of the primary compound; mixtures or combinations of the above-mentioned compounds.

10. A gas generating system comprising a gas generator according to one of claims 1 to 9 and an inflatable enclosure, so arranged that the gases released by the gas generator can inflate said enclosure.

11. A gas generating system comprising a gas generator according to one of claims 1 to 9 and a cylinder so arranged that the gases released by the gas generator can pressurize the cylinder.
